# FASCICULE DE BREVET EUROPEEN

(11) **EP 0 325 220 B1**
(45) Date de publication et mention de la délivrance du brevet: **10.03.1993**
(21) Numéro de dépôt: 89100775.9
(22) Date de dépôt: 18.01.1989
(51) Int. Cl.: H04Q 11/04, H04Q 3/545

(54) **Système de commutation temporelle**
Zeitvermittlungssystem
Time-switching system

(30) Priorité: 22.01.1988 FR 8800697
(43) Date de publication de la demande: 26.07.1989
(73) Titulaire: ALCATEL BUSINESS SYSTEMS, F-75008 Paris (FR)
(72) Inventeur: Vergnaud, Gérard, F-95130 Franconville (FR); Thomas, Gérard, F-95610 Eragny sur Oise (FR)
(74) Mandataire: Weinmiller, Jürgen

(56) Documents cités:
- EP-A- 0 185 936
- FR-A- 2 557 751
- IEEE COMMUNICATIONS MAGAZINE, vol. 21, no. 3, mai 1983, pages 47-52, IEEE, New York, US; M. KAJIWARA: "Trends in digital switching system architectures"
- NACHRICHTENTECHNISCHE ZEITSCHRIFT N.T.Z., vol. 36, no. 8, août 1983, pages 512-516, Berlin, DE; H. MAY et al.: "Mikrorechnergesteuerte Reihenanlage mit Vierdrahtanschluss"
- TELECOMMUNICATION SWITCHING - State of the art impact on networks and services, Proceedings of the International Switching Symposium, 7-11 mai 1984, Florence, Italy, édité par AEI, partie 1, pages 1-6, North-Holland, Amsterdam, NL; A. MOLINARI et al.: "MC 240 - A remote multiplexer - Concentrator for local applications"

## Description

L'invention concerne les systèmes de commutation temporelle, notamment multiservices, de type installation d'intercommunication ou autocommutateur.

Ces systèmes assurent des transmissions, sélectives et à la demande, d'informations entre des terminaux de télécommunications qui leur sont raccordés. Ils sont susceptibles de fonctionner, soit isolément, soit dans le cadre de réseaux de télécommunications composés de systèmes identiques ou compatibles.

Un exemple d'un tel système est décrit dans un article publié dans le numéro 8 du volume 36 d'Août 1983 de la revue allemande "Nachrichtentechnische Zeitschrift NTZ" par H.MAY et K.OLLIG avec pour titre "Mikrorechnergesteuerte Reihenanlage mit Vierdrahtanschluss".

Ce système dispose d'un réseau interne de liaison par bus aux bornes duquel sont connectées des terminaisons pour des liaisons téléphoniques d'interconnexion aux autres systèmes et/ou pour des terminaux de communication d'informations. De manière connue, le système assure une mémorisation temporaire des informations qu'il commute, ces dernières étant morcelées en échantillons successifs à cet effet.

Une base de temps assure la synchronisation des opérations de mise en mémoire et d'envoi des informations à l'intérieur du système.

Une logique de commande assure l'établissement des communications des terminaisons dans le système, elle comporte usuellement au moins un processeur de gestion auquel sont associés des équipements auxiliaires spécialisés pour permettre de réaliser l'ensemble des tâches impliquées par le fonctionnement du système.

Ces équipements auxiliaires comportent eux-mêmes des processeurs affectés à la réalisation de fonctions particulières pour lesquels ils sont spécifiquement structurés.

Ceci conduit à des systèmes dont l'architecture tant matérielle que logicielle tend à comporter des redondances et des anomalies qui s'accroissent généralement au fur et à mesure du temps, en liaison avec les adaptations effectuées pour répondre à l'évolution des besoins des utilisateurs.

Les systèmes d'un même modèle tendent donc à se diversifier de plus en plus et leur fonctionnement tend à se dégrader.

Pour remédier à cet inconvénient, l'invention propose un système de commutation temporelle, de type installation d'intercommunication ou autocommutateur,qui est commandé par une logique programmée de gestion à processeur de commande associé à un ensemble de mémoires, et qui est synchronisé pour assurer des échanges d'informations, sélectivement et à la demande, entre des terminaisons auxquelles sont raccordés des terminaux de télécommunications, soit directement, soit par l'intermédiaire de liaisons aboutissant à d'autres systèmes de commutation, compatibles, auxquels ces terminaux sont alors rattachés.

Selon une caractéristique de l'invention, le système comporte:
- une logique programmée de gestion dotée d'un unique processeur de traitement pour commander l'ensemble des opérations effectuées tant au niveau de la logique de gestion que des terminaisons, d'une mémoire, directement adressable par ce processeur unique, pour le stockage des données et des programmes, qui est scindée en un sous-ensemble interne, pour les programmes de bas niveau et de traitement de signal, et un sous-ensemble externe, pour les programmes de gestion et les programmes de niveau supérieur, un séquenceur associé à une base de temps pour contrôler les transmissions bidirectionnelles entre les terminaisons, tant avec le processeur de traitement qu'entre elles, via ce processeur de traitement à un port unique duquel ces terminaisons sont reliées par un bus unique, via un agencement de mise en phase, ce bus étant composé de deux liaisons multiplexes temporelles inverses;
- des terminaisons incluant chacune une interface standardisée pour l'uniformisation des échanges d'informations de signalisation avec la logique de gestion et une interface spécifique pour les adaptations nécessaires à la transmission des informations entre les terminaux ou liaisons desservis par la terminaison considérée et la logique de gestion.

L'invention, ses caractéristiques et ses avantages sont précisés dans la description qui suit en liaison avec les figures répertoriées ci-après.

La figure 1 présente un schéma de principe d'un système de commutation selon l'invention.

La figure 2 présente un schéma d'un exemple d'un circuit d'interface standardisé pour terminaison d'un système de commutation temporelle selon l'invention.

La figure 3 présente un schéma d'un exemple de terminaison de ligne ou poste RNIS.

La figure 4 présente un schéma d'un exemple de terminaison pour lignes analogiques de poste téléphonique.

La figure 5 présente un diagramme d'enchaînement des interruptions dans un système selon l'invention.

La figure 6 présente un schéma d'organisation d'un agencement partiel de mémoire du processeur du système selon l'invention.

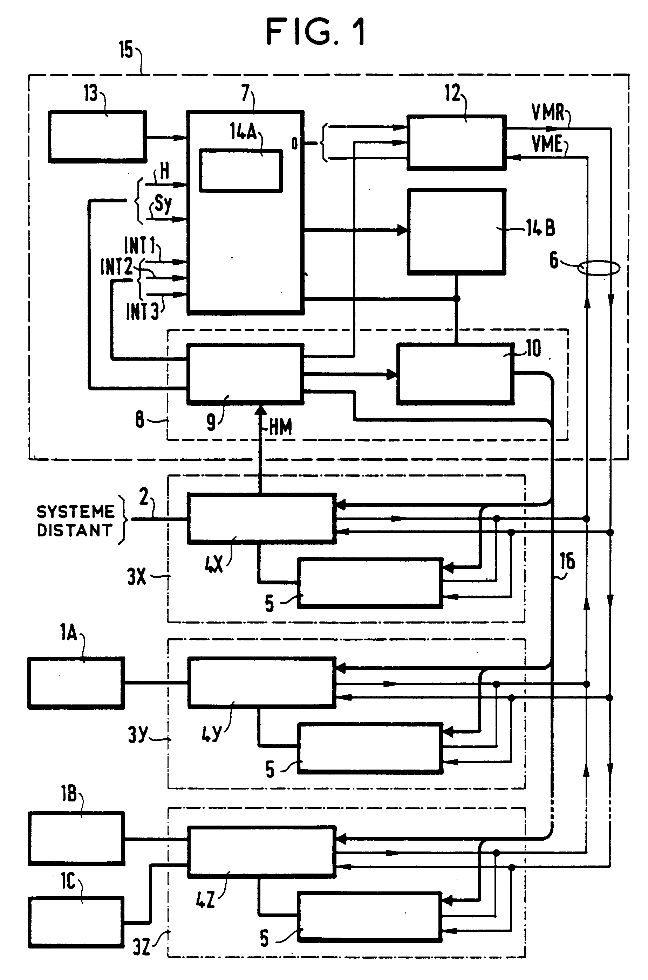

Le système de commutation temporelle présenté figuré 1 est destiné à interconnecter sélectivement entre eux et à leur demande des terminaux de communication d'information 1, soit directement si ces terminaux sont raccordés au système lui même comme le sont les terminaux 1A, 1B, 1C sur la figure 1, soit indirectement si ces terminaux sont raccordés à d'autres systèmes qui sont reliés par des liaisons téléphoniques d'interconnexion au système ici considéré, une telle liaison 2 d'interconnexion à un système distant étant aussi présentée sur la figure 1.

Les terminaux de communication d'information 1 permettent une conversion des informations qu'ils reçoivent de l'homme ou d'une machine en signaux qui sont immédiatement ou ultérieurement codés ou transcodés et formatés de manière à pouvoir être transmis et commutés ; ils assurent généralement aussi la conversion inverse des signaux reçus du système en informations compréhensibles par l'homme et/ou exploitables par des machines.

Sont ainsi inclus, parmi les terminaux de communication d'information envisagés, ceux dont le raccordement à un système de commutation s'effectue par l'intermédiaire d'interfaces de type "SO ou Z" selon les recommandations du CCITT. Ces terminaux sont par exemple des postes téléphoniques analogiques ou numériques, des appareils d'intercommunication, des télécopieurs, des répondeurs téléphoniques, des ordinateurs personnels communicants, des terminaux de vidéographie interactive, des terminaux de téléaction...

Les liaisons d'interconnexion 2 peuvent éventuellement être de classiques lignes réseau de type analogique, préférablement ce sont des liaisons multiplexes temporelles.

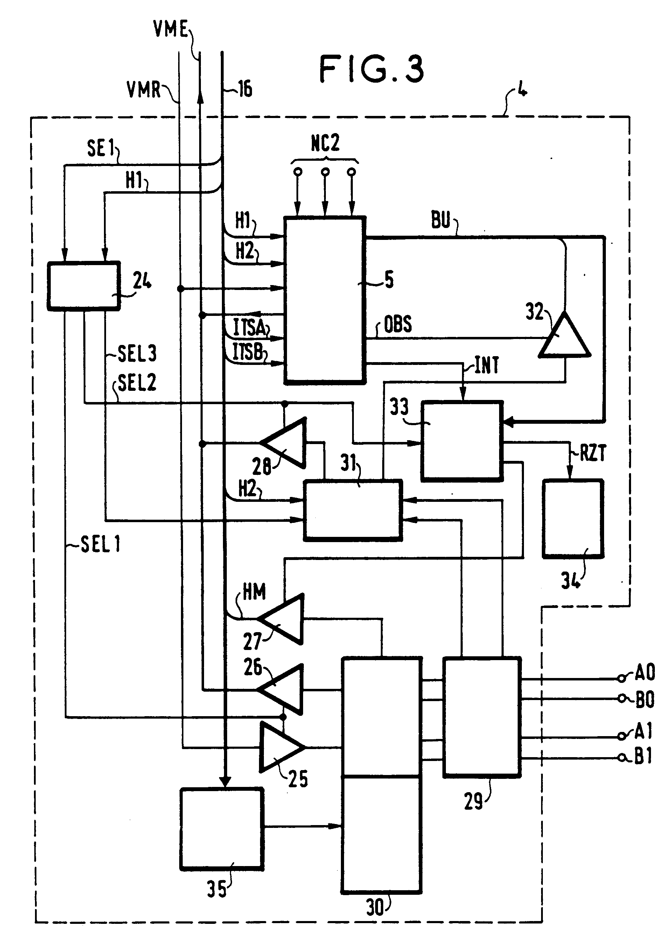

Les terminaux 1 et les liaisons d'interconnexion 2 raccordés au système aboutissent à des terminaisons 3, ici référencées 3X, 3Y, 3Z qui sont éventuellement partagées par plusieurs terminaux ou par plusieurs liaisons et qui peuvent également pour au moins certaines d'entre elles être raccordées à un terminal ou à une liaison d'interconnexion, telle par exemple la terminaison 3X détaillée en figure 3.

Les terminaisons du système de commutation temporelle comportent identiquement des interfaces spécifiques 4, telles 4X, 4Y, 4Z auxquelles viennent se raccorder les terminaux et les liaisons d'interconnexion entre systèmes, ainsi que des interfaces standardisées 5 reliées en parallèle avec les interfaces spécifiques au coeur du système de commutation temporelle.

Les interfaces standardisées 5 des terminaisons sont concues pour assurer l'uniformisation des échanges d'informations de signalisation avec le coeur du système ; chacune d'elle effectue donc les émissions et les réceptions d'informations de signalisation de la terminaison qui la comporte, vers ou en provenance de ce coeur.

Les interfaces spécifiques 4, telles 4X, 4Y, 4Z, assurent les adaptations nécessaires à la transmission d'informations entre les terminaux ou liaison d'interconnexion et le coeur du système, via les interfaces standardisées 5 dans le cas de la signalisation, elles assurent aussi les nécessaires modifications de niveaux, changements de format et/ou conversions liés aux différences existant entre les terminaux en fonction de leurs utilisations et entre les différentes variantes de liaisons d'interconnexion.

Une rationalisation est également recherchée au niveau des interfaces spécifiques ; les interfaces spécifiques 4X et 4Y sont par exemple constitués chacune par une interface de type "SO/TO" selon les recommandations du CCITT qui est configurable de manière à servir d'accès soit à une liaison d'interconnexion 2, soit à un terminal en cas d'utilisation du système de commutation temporelle dans le cadre d'un réseau numérique à intégration de service "RNIS" et donc selon les normes correspondantes.

L'interface spécifique 4Z est par exemple une interface de type "Z" pour les lignes des postes téléphoniques analogiques que sont alors les terminaux 1B et 1C.

Selon l'invention, les interfaces spécifiques et standardisées des terminaisons du système de commutation temporelle sont reliées en parallèle par une liaison bus 6 à un port d'entrée-sortie série de données 0 d'un processeur 7 dont la mémoire assure une conservation temporaire, aux fins de commutation temporelle, des signaux qui émanent des terminaux 1 et liaisons d'interconnexion 2, via les terminaisons 3, et qui sont destinés à être transmis plus avant.

Dans l'exemple proposé la liaison bus 6 associe deux liaisons multiplex temporelles VME et VMR respectivement réservées l'une VME pour les signaux émis vers le processeur 6 à partir des terminaisons et l'autre VMR pour les signaux circulant en sens inverse.

Dans le cas d'un petit système cette liaison bus est par exemple une liaison MIC à 2,048 Mbit/s.

Une unité de synchronisation 8 assure l'attribution périodique et sélective de la liaison bus 6 à chacune des terminaisons pour ses échanges d'informations avec le processeur 7.

Cette unité de synchronisation 8 comporte une base de temps 9 associée à un séquenceur 10 chargé d'assurer la configuration des voies MIC en fonction des terminaisons desservies, ces dernières transmettent une indication à cet effet à chaque initialisation du système. La base de temps 9 est pilotée par une horloge interne, si le système est isolé ou maître ; elle est pilotée par une horloge externe, lorsque le système est esclave d'un autre auquel il est rattaché. Dans l'exemple proposé c'est la liaison d'interconnexion 2 qui transmet les signaux d'horloge pilote fournis par le système distant, ceux-ci étant transmis à la base de temps 9 par les circuits actifs sur la liaison d'interconnexion 2 et via la terminaison 3X et une liaison d'horloge maître HM.

La base de temps 9 comprend par exemple une chaîne de comptage pilotée par un oscillateur contrôlé en tension, ici elle assure aussi le décodage d'instants particuliers.

Dans la réalisation proposée, cette base de temps 9 fournit des signaux d'horloge H et de synchronisation SY, d'une part au processeur 7 pour ces émissions et réceptions de données sur la liaison bus 6 et d'autre part à un agencement 12 qui assure une mise en phase de chacune des données émises afin de faciliter la prise en compte de ces données par les organes chargés de les récupérer au niveau du processeur ou des terminaisons. Cet agencement 12 est constitué par une combinaison de bascules classique en la matière.

La base de temps 9 fournit aussi au séquenceur 10 des signaux répétitifs lui permettant de sélectionner les circuits à actionner dans les terminaisons en vue des émissions et réceptions de données impliquant la liaison bus 6.

En dernier lieu la base de temps 9 est chargée de produire des interruptions cycliques INT1, INT2 et INT3 à destination du processeur, via des liaisons repèrées au moyen des mêmes références, pour assurer le fonctionnement du système selon un processus qui sera évoqué plus loin.

Le processeur 7 est un processeur de traitement de signaux ayant une forte puissance de traitement au moins de l'ordre de dix MIPS pour un petit système.

C'est par exemple un microprocesseur TMS 320 C25 de la société TEXAS INSTRUMENTS, possédant une architecture interne de type HARVARD dans laquelle les programmes et données sont dans des espaces d'adressage séparés, un bus d'adresse et un bus de données, accessibles de l'extérieur du boîtier du processeur, desservent les mémoires.

Deux unités arithmétiques et logiques sont contenues dans ce microprocesseur l'une étant dédiée au traitement des adresses l'autre au traitement des données.

Une horloge externe autonome 13 pilote le processeur 7, elle délivre ici un signal de fréquence quarante mégahertz.

Un ensemble de mémoires est affecté au processeur 7, il comprend ici un sous-ensemble interne 14A composé d'une mémoire vive et d'une mémoire morte ainsi qu'un sous-ensemble externe 14B également composé d'une mémoire vive et d'une mémoire morte. Les mémoires externes sont ici du type à temps d'accès standard. La répartition et l'emplacement de ces mémoires sont susceptibles d'être différents et ne doivent pas être considérés comme significatifs dans le cadre de l'invention.

Le sous-ensemble externe de mémoire 14B contient par exemple les programmes de gestion du système et les programmes de niveau supérieur gérant notamment les accès SO et TO évoqués plus haut ou les programmes d'exploitation téléphoniques des interfaces spécifiques de postes analogiques.

Les programmes de bas niveau et de traitement du signal, impliqué par exemple par les fonctions de type HDLC, la détection des codes de type Q23, le traitement des conférences, sont stockés dans le sous-ensemble interne 14A et utilisent la mémoire vive comme champ de données.

Une partie de la mémoire vive au moins est préférablement sauvegardée grâce à une alimentation temporaire indépendante par exemple à l'aide de piles.

Au moins une zone de cette mémoire vive est susceptible d'être commune à deux processeurs 7, ce qui permet une duplication sécuritaire de ce dernier, comme cela est classique dans de nombreux systèmes de commutation.

L'essentiel des fonctions mises en oeuvre dans le système de commutation temporelle est réalisé en logiciel par l'unité de gestion 15 que constitue le processeur 7 et ses auxiliaires, ceux-ci étant essentiellement l'horloge 13, l'unité de synchronisation 8, et le sous-ensemble externe de mémoire 14B.

Le fonctionnement du système sera précisé plus loin après définition des autres éléments constitutifs.

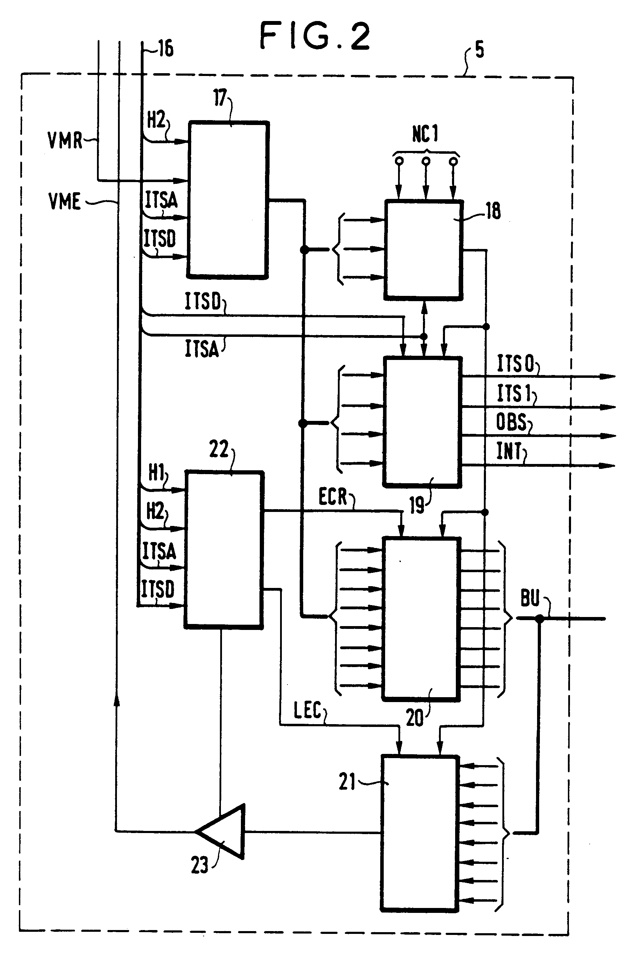

Un exemple d'interface standardisée 5 est présenté en figure 2 ; comme déjà évoqué plus haut, cette interface est reliée par les fils VME et VMR de la liaison bus d'accès au port d'entrée-sortie série du processeur 7.

Une liaison commune 16 relie chaque interface standardisée 5 à l'unité de synchronisation 8. Cette liaison 16 fournit sur ses différents fils des signaux d'horloge H1, H2, provenant de la base de temps 9 et des signaux de réservation d'intervalles de temps ITSA, ITSD provenant du séquenceur 10.

Dans l'exemple de réalisation proposé au moins deux intervalles de temps sont nécessaires à la transmission bidirectionnelle de données entre l'unité de gestion 15 et une terminaison 3 sous le contrôle de l'unité de gestion 15, un intervalle de temps ITSA sert à transmettre l'adresse de l'interface standardisée 5 concernée, un second intervalle de temps ITSD permet ici les transmissions bidirectionnelles de données de signalisation entre l'unité de gestion et la terminaison concernée. Ces deux intervalles de temps peuvent être compris dans des trames différentes.

Un registre d'adresse/données 17 reçoit les signaux ITSA, ITSD pour différencier les données d'adresse de celles de signalisation qui sont transmises les unes et les autres en série au registre 17 par la liaison VMR, le signal d'horloge H2 est aussi reçu par ce registre pour la saisie de ces données.

Un comparateur d'adresse 18 permet de comparer l'adresse reçue via la liaison VMR avec une adresse câblée NC1 d'interface standardisée. La sortie du comparateur 18 active un sélecteur d'entrée 19 et deux registres tampons 20 et 21 en cas de reconnaissance d'adresse.

Le sélecteur d'entrée 19 reçoit ici les signaux ITSA, ITSD et en parallèle quatre des huit données fournies par la liaison VMR au cours d'un intervalle de temps ; il fournit un signal d'intervention INT, une commande d'observation OBS et deux indications d'intervalle de temps de signalisation ITSO et ITSI sur autant de fils différents qui aboutissent à l'interface spécifique 4 associée dans la même terminaison 3.

Le registre tampon d'écriture 20 reçoit en parallèle les huit données fournies par la liaison VMR au cours d'un intervalle de temps, lorsqu'il est activé par le comparateur 18 et par une commande d'écriture fournie par une base de temps locale d'écriture/lecture 22.

Il assure alors la transmission de ces données en parallèle sur les fils d'une liaison BU qui le relie à l'interface spécifique 4 associée.

La base de temps locale 22 reçoit les signaux H1, H2, ITSA, ITSD de l'unité de synchronisation 8, via les fils correspondants de la liaison 16, en vue d'assurer la saisie et le transfert des données de signalisation concernant la terminaison 3 qui la comporte.

Le registre de lecture 21, qui est de type à entrées parallèles et sortie série, est connecté par ses entrées aux fils de la liaison BU au travers duquel il reçoit les données de signalisation provenant de l'interface spécifique 4 associée à l'interface standardisée 5 qui le comporte. Il est commandé par la base de temps locale 22, via un fil de commande de lecture et par la sortie série des données de signalisation qu'il reçoit de l'interface spécifique 4 associée et qu'il mémorise temporairement. Une porte d'accès 23, classiquement de type à trois états, est intercalée entre le registre de lecture 21 et la liaison VME, elle est elle-même contrôlée par la base de temps locale 22 qui l'active pendant les intervalles de temps réservés à la transmission des signalisations pour la terminaison concernée.

La figure 3 propose un exemple de terminaison pour terminal ou ligne de réseau numérique à intégration de service (RNIS) incluant une interface standardisée 5 et une interface spécifique 4X ou 4Y.

L'interface spécifique 4, telle 4X ou 4Y, est connectée à la liaison 16 issue de l'unité de synchronisation et aux fils VME, VMR de la liaison bus 6 en parallèle avec l'interface standardisée 5 de la terminaison qui la comporte.

Cette interface standardisée 5 reçoit les signaux H1, H2, ITSA, ITSD de la liaison 16, elle est reliée aux fils VME et VMR, elle reçoit une indication d'adresse câblée NC1 identifiant la terminaison qui la comporte vis-à-vis du coeur du système, elle fournit les signaux INT, OBS et elle est susceptible d'échanger des données de signalisation avec les autres éléments de la terminaison, via les fils d'une liaison BU.

L'interface spécifique 4 comporte un sélecteur 24 recevant le signal d'horloge H1 de la base de temps 9 et une commande de sélection de terminaison SE1 en provenance du séquenceur 10, afin d'assurer les émissions et réceptions de données avec le coeur de chaîne, via les fils VME et VMR. A cet effet le sélecteur 24 commande une série de portes 25, 26, 27, 28 d'accès en émission au fil VME et en réception à partir du fil VMR.

Les portes 25, 26 sont commandées par le sélecteur 24, via une liaison SEL1, pendant le ou les intervalles de temps réservés à la terminaison les contenant, elles permettent la mise en liaison des fils VME et VMR avec les quatre fils AO, BO, A1, B1, de poste ou de ligne RNIS, via un circuit de ligne réseau ou de poste 29 en série avec un module d'interface 30.

Le circuit 29 d'un terminal 1A ou d'une ligne 2 d'accès RNIS comporte classiquement deux transformateurs affectés chacune à une des paires de fils AO, BO ou A1, B1, une alimentation de type fantôme pour le poste, un circuit de surveillance des tensions des paires de fils, des protections et un filtre d'entrée. Ce circuit de ligne ou poste 29, configurable à la demande, communique par quatre fils avec le module d'interface 30 et par deux fils avec un circuit de signalisation d'état 31 relié pour émission d'une part au fil VME, via la porte 28, et d'autre part à l'un des fils de la liaison BU , via une porte d'accès 32.

Le circuit de signalisation d'état 31 reçoit aussi le signal H2 et une commande de sélection SEL3 du sélecteur 24, les portes 28 et 32 sont respectivement commandées par une commande de sélection SEL2 du sélecteur 24 et par la commande d'observation OBS émanant de l'interface standardisée 5 associée.

Le module d'interface 30 assure les échanges de données entre les portes 25, 26 et les fils AO, BO, A1, B1.

C'est par exemple un circuit de niveau "1" de type THOMSON TS5420 ou SIEMENS PEB 2080 qui est configuré en mode "NT" maître en configuration "SO" de terminal et "NT" esclave en configuration "TO" de ligne réseau.

Des signaux d'horloge sont extraits de la ligne réseau en cas de configuration "TO", ils sont appliqués à la liaison d'horloge maître HM via la porte 27 pour asservir la base de temps 9 du système à l'horloge maître du système distant qui est alors transmise par l'intermédiaire des fils AO, BO, A1, B1 de la ligne réseau 2.

La porte 27 est activée par un circuit logique 33, ce dernier est relié à la liaison BU et reçoit la commande de sélection SEL2 ainsi qu'une commande INT de l'interface standardisée 5 associée, de manière à assurer la transmission des signaux de l'horloge maître distante vers la base de temps 9.

La circuit logique 33 assure également les remises à zéro de l'ensemble du système de commutation temporelle, via un circuit de remise à zéro 34, en cas de besoin et sur commande soit manuelle d'un opérateur, soit télécommandée par l'unité de gestion via la liaison BU, les liaisons avec les éléments concernés du système n'étant pas figurées ici.

Un circuit de synchronisation 35 assure la synchronisation des émissions de signaux par le module d'interface 30, il est relié à la base de temps 9 par la liaison 16 prévu à cet effet.

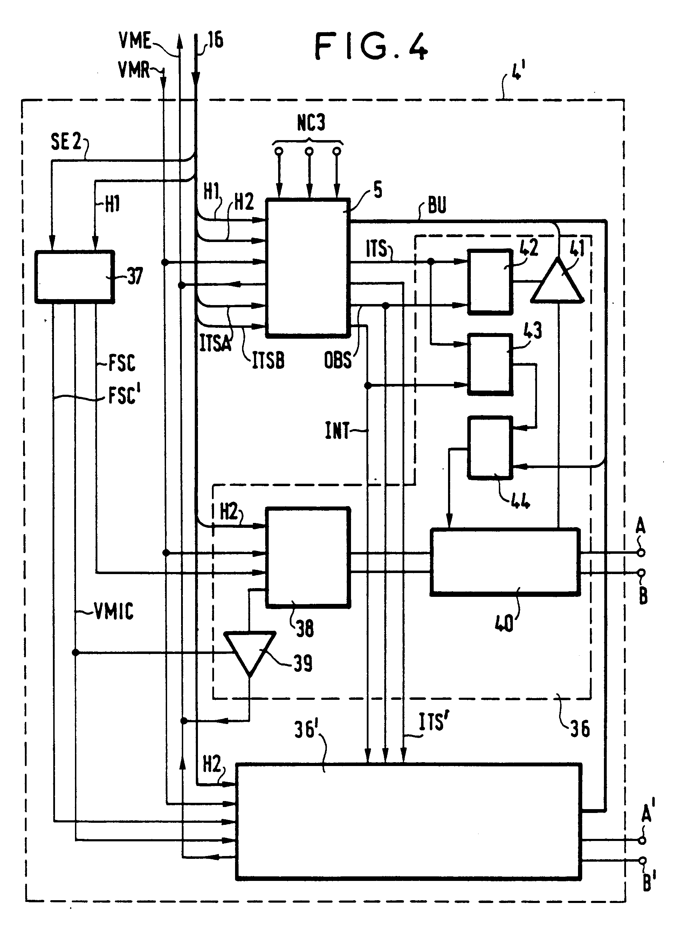

Un autre exemple de terminaison pour terminaux est également fourni sur la figure 4, il concerne une terminaison pour postes téléphoniques analogiques reliés à leur centre de rattachement par des lignes d'abonné à deux fils.

La ligne à deux fils desservant un poste est classiquement relié à un agencement de ligne 36 ou 36′. Les agencements de ligne 36, 36′ et un sélecteur 37 constituent alors l'interface spécifique qui, associée avec une interface standardisée 5, forme une terminaison 4′ pour des postes téléphoniques analogiques montrés ici au nombre de deux et respectivement reliés l'un aux fils A, B, l'autre aux fils A′, B′.

L'interface standardisée 5 de la terminaison 4′ est dotée d'une adresse NC3 qui permet d'identifier la terminaison, elle est reliée à la liaison 16 et aux fils VME, VMR comme les autres interfaces standardisées.

Chaque agencement de ligne 36 ou 36′ est relié aux fils VME et VMR et reçoit de plus le signal d'horloge H2 de la liaison 16, une commande d'émission VMIC du sélecteur 37 et un signal de synchronisation FSC ou FSC′. Le sélecteur 37 reçoit à cet effet un signal de sélection de terminaison SE2 du séquenceur 10 et le signal d'horloge H1 en provenance de la base de temps 9 via la liaison 16.

Les fils VME et VMR sont reliés à un circuit 38 de type cofidec qui, dans chaque agencement de ligne 36 ou 36′, assure classiquement la conversion des signaux transmis sous forme analogique par les fils A, B ou A′, B′ en échantillons MIC et réciproquement, au rythme fixé par le signal de synchronisation reçu via la liaison FSC pour l'agencement de ligne 36 et via la liaison FSC′ pour l'agencement de ligne 36'.

Une porte d'accès 39 de type trois états, assure la mise en liaison du circuit cofidec 38 de chaque agencement de ligne avec le fil VME, elle est activée par le sélecteur 37, via une liaison VMIC pendant les intervalles de temps de trame réservés à la terminaison 4′ considérée.

Un circuit de ligne 40 sert d'interface entre le circuit cofidec 38 et les fils A, B.

Ce circuit de ligne assure classiquement l'alimentation du poste relié aux fils A, B, la nécessaire adaptation d'impédance, la génération et l'injection de sonnerie, la détection de boucle et la séparation 2 fils/4 fils.

Les différentes signalisations transitent par l'interface standardisée 5 de la terminaison 4′ considérée.

A cet effet chaque circuit de ligne est relié à un fil de la liaison BU pour l'intermédiaire d'une porte d'accès 41 que contrôle l'interface standardisée.

Une bascule 42, reliée par sa sortie à l'entrée de commande de la porte d'accès 41, reçoit à cet effet la commande d'observation OBS et une commande de sélection ITS ou ITS′ propre au circuit de ligne considéré et à l'intervalle de temps de trame réservé pour la signalisation de ce circuit dans chaque super trame.

Les signalisations provenant de l'unité de gestion 15 à destination d'un circuit de ligne sont transmises par l'intermédiaire d'au moins un élément logique associant une poste 42, de type ET, à une bascule 44. La bascule 44 reçoit la signalisation par l'intermédiaire d'un fil de liaison BU et elle est actionnée par le signal de la porte 43 à réception simultanée du signal ITS, ou ITS′, et de la commande d'intervention INT qui lui sont fournis par l'interface standardisée 5 de la terminaison qui la comporte.

La description ci-dessus du système met en évidence le niveau d'intégration atteint en ce qui concerne les fonctions usuellement implémentées en matériel, seuls les fonctions de niveau physique restent donc implémentées de façon matérielle.

L'unité de gestion 15 assure les tâches en temps réel qui concernent les entrées et sorties de données, via la liaison série 6 reliant les terminaisons 3 au processeur 7, par exemple les connexions temporelles - s'effectuant ici avec des débits potentiels simultanés de 32, 64 ou 128 Kbit/s -, les détections de signalisation en code normalisé Q23, le filtrage de la signalisation, le traitement des signaux HDLC du canal D des lignes et terminaux RNIS, la génération des tonalités, le traitement des conférences. Elle assure également les tâches d'application et de gestion téléphonique.

De manière non représentée, il est également prévu d'associer une unité d'émission-réception asynchrone "UART" au processeur 7 afin de permettre le raccordement individuel d'un équipement de gestion ou de maintenance par l'intermédiaire d'une liaison de transmission normalisée par exemple de type V24 ou V28. Ceci permet d'accèder aux mémoires du processeur au moyen d'un ordinateur ou d'un terminal à écran et clavier qui sont aptes à émettre et recevoir des données par une telle liaison.

Le processeur 7 reçoit, via le fil VME, la signalisation émanant des terminaisons, en particulier des informations relatives aux états de boucle des lignes de poste téléphonique, aux signalisations démodulées par les terminaisons de lignes pour postes téléphoniques numériques, aux indications fournies par les terminaisons RNIS, aux données reçues via les canaux D de ces dernières.

Ce processeur 7 transmet à son tour ses commandes d'observation et d'intervention ainsi que les données des trames "HDLC" via le fil VMR vers les terminaisons.

Les fils VME, VMR permettent également au processeur 7 d'avoir accès aux signaux de parole numérisés et aux données amenés à circuler par l'intermédiaire du système de commutation temporelle.

Le processeur 7 interprète les signalisations transmises dans la bande et synthétise de telles signalisations pour les émettre via les terminaisons, il réalise également les commutations et assure les conférences.

La liaison 6 supporte les intervalles de temps affectés aux terminaisons. L'unité de gestion 15 assure automatiquement le configuration de la trame en fonction des terminaisons raccordées à la liaison grâce aux informations alors fournies par chaque terminaison concernant leur type et leur modularité, en début d'exploitation et après modification ou arrêt.

Le logiciel d'exploitation est composé de trois niveaux correspondant respectivement au logiciel système, c'est-à-dire de fonctionnement, du processeur 7, à un logiciel de traitement des signalisations et au logiciel spécifique à l'application. Le logiciel système assure la gestion multitâche, les protections intertâches, le partage des ressources, les synchronisations et les communications intertâches. Il comporte aussi les services, dits de système de processeur 6, qui offrent les facilités de gestion des mémoires, de temporisation, d'entrée/sortie et d'horloge.

Le logiciel système assure notamment la calibration des évènements à produire en temps réel et le décodage des associations de microévènements cohérents afin d'assurer dans ce dernier cas une fonction d'automate de signalisation.

Le logiciel de traitement de signal est ici essentiellement contenu dans le sous-ensemble interne de mémoire 14A du processeur pour être accessible rapidement, il concerne la signalisation, c'est-à-dire la détection des changements d'état, et les tâches proprement dites de traitement de signal, par exemple la détection de fanion, l'extraction des bits de bourrage, pour les trames de type HDLC, la sommation des signaux en temps réel reçus en cas de conférence.

Le logiciel d'application est le logiciel de gestion téléphonique, il est ici contenu dans le sous-ensemble externe de mémoires 14B du processeur dans la mesure où la rapidité d'accès n'est pas critique.

Ce logiciel de gestion téléphonique est ici divisé en deux couches, une couche exploitation, indépendante du type des terminaisons 3 raccordées à l'unité de gestion 15 et une couche de terminaison qui prend en compte les spécificités de ces terminaisons.

La couche terminaison assure notamment les fonctions de conversion physique/logique, de traduction, de supervision, de gestion des auxiliaires et des cadences ainsi que des appels.

La couche exploitation permet notamment de connaître l'état des liaisons entre terminaisons et de faire évoluer cet état en fonction des réponses et confirmations en provenance de la couche terminaison.

Le dialogue entre le programme et les interventions à faire sur les terminaisons s'effectue par les mémoires vives internes ou externes du processeur où s'inscrivent les données de ce dialogue. Le processeur 7 de par sa rapidité est apte à assurer le traitement numérique des échantillons de temps réel rapide et par exemple le traitement des signalisations multifréquences transmises par des voies temporelles codées MIC ; il sait aussi travailler avec une périphérie lente par câblage interne pour la gestion téléphonique contenue dans le sous-ensemble externe 14B.

Le fonctionnement du processeur 7 est rythmé par les interruptions générées cycliquement par la base de temps 9.

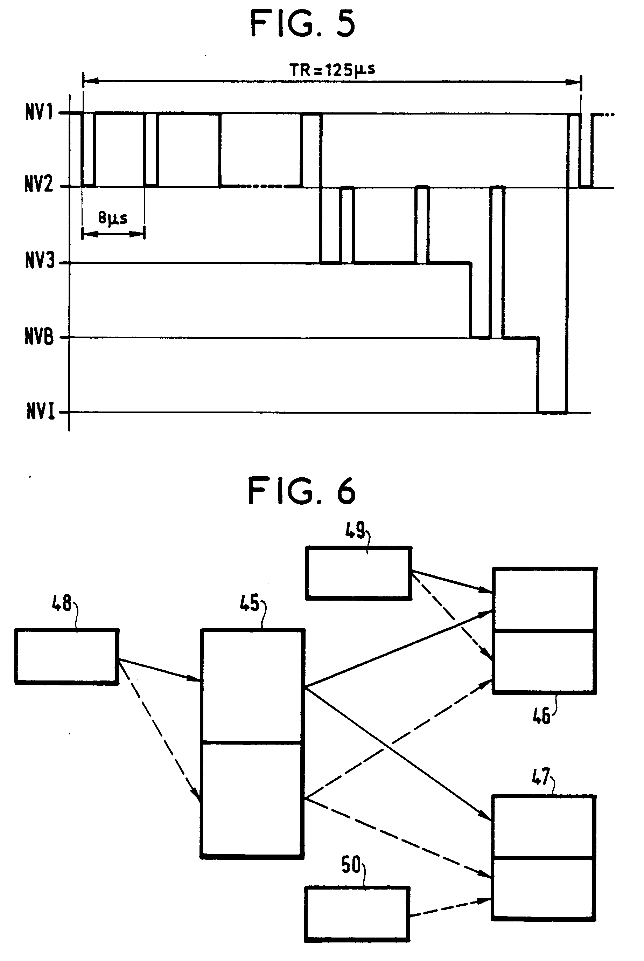

Trois niveaux d'interruption externe sont prévus ici, ils sont référencés NV1, NV2, NV3 sur la figure 5, ils correspondent chacun à un cycle d'interruption différent.

L'interruption prioritaire câblée INT1 de niveau NV1 se produit toutes les cent vingt cinq microsecondes, soit la durée d'une trame TR dans l'exemple choisi. Elle déclenche les tâches de traitement du signal et elle peut céder sa priorité par un jeu de masques prévu à cet effet. Le traitement du signal s'effectue à l'aide d'une table de commande 45 -figure 6- écrite par les niveaux supérieurs du logiciel. Dans l'exemple de réalisation proposé, trois lignes sont réservées dans la table à chaque intervalle de temps sortant. La première ligne adresse le programme réalisant la fonction désirée par exemple connexion, détection de signalisation Q23, génération de tonalités, conférence... La table de commande est doublée de manière que le fonctionnement ne soit pas perturbé par des problèmes liés à l'exploitation de la liaison série. En particulier l'écriture et la lecture dans une table au cours d'une trame s'effectuent dans des parties différentes de cette table.

La second ligne donne l'adresse de l'intervalle de temps concerné dans une table 46 d'intervalles de temps sortants, qui est doublée elle aussi et pour les mêmes raisons.

La troisième ligne définit un paramètre variable selon la tâche. En cas de connexion, ce paramètre est l'adresse d'un intervalle de temps dans une double table 47 d'intervalles de temps entrants. Les tables 46 et 47 sont adressées séparément par des registres 49 et 50.

Les interruptions INT1 lisent la première ligne de la table de commande 46 ce qui entraîne un branchement sur la première tâche à effectuer. Elles utilisent à cet effet un registre d'adresse spécifique 48 qui pointe les lignes de table de commande.

Toutes les tâches se terminent identiquement par une incrémentation du registre d'adresse spécifique 48, un chargement d'un accumulateur avec le contenu de l'adresse pointée dans le registre d'adresse, un branchement à l'adresse contenue dans l'accumulateur. Les tâches s'appellent donc directement l'une, l'autre.

L'interruption INT1 assure aussi l'initialisation des pointeurs de travail pour l'interruption INT2 de niveau NV2 à cycle plus rapide, cette dernière travaille sur trois registres d'adresse du processeur 7 utilisés respectivement pour adresser la table d'entrée des intervalles de temps entrants, adresser la table de sortie des intervalles de temps sortants et servir de registre de travail.

A cet effet l'interruption INT2 se produit toutes les huit microsecondes à compter d'une interruption INT1 et elle gère donc les entrées/sorties de données sur les fils VME, VMR de la liaison série 16.

Dans l'exemple proposé le processeur 7 est du type seize bits ce qui correspond au contenu de deux intervalles de temps chaque intervalle ayant une durée de quatre microsecondes.

Lorsque la traitement prioritaire de sauvegarde et initialisation du à l'interruption INT1 est terminé le traitement demandé par l'interruption INT2 est repris, il en sera de même pour les traitements entraînés par l'interruption INT3 et par la boucle de niveau de base.

L'interruption INT3 de niveau NV3 se produit ici toutes les huit millisecondes, elle permet d'effectuer les tâches en temps réel du système d'exploitation téléphonique, par exemple la synchronisation des numérotations.

Après traitement des tâches prioritaires demandées par les interruptions, le processeur 7 exécute le traitement des tâches non prioritaires, lorsque le niveau de base NVB est atteint -figure 5-quand toutes les tâches sont acquittées le processeur 7 passe éventuellement au repos, correspondant au niveau NVI, sur la figure 5.

## Revendications

1. Système de commutation temporelle, de type installation d'intercommunication ou autocommutateur,qui est commandé par une logique programmée de gestion à processeur de commande associé à un ensemble de mémoires directement adressables, et qui est synchronisé pour assurer des échanges d'informations, sélectivement et à la demande, entre des terminaisons(3) auxquelles sont raccordés des terminaux de télécommunications (1) soit directement, soit par l'intermédiaire de liaisons (2) aboutissant à d'autres systèmes de commutation, compatibles, auxquels ces terminaux sont alors rattachés, le système étant caractérisé en ce qu'il comporte:
- une logique programmée de gestion (15) dotée d'un unique processeur de traitement (7) pour commander l'ensemble des opérations, effectuées tant au niveau de la logique de gestion que des terminaisons (3), d'une mémoire, directement adressable par ce processeur unique, pour le stockage des données et des programmes, qui est scindée en un sous-ensemble interne (14A), pour les programmes de bas niveau et de traitement de signal, et un sous-ensemble externe (14B), pour les programmes de gestion et les programmes de niveau supérieur, un séquenceur (10) associé à une base de temps (9) pour contrôler les transmissions bidirectionnelles entre les terminaisons, tant avec le processeur de traitement qu'entre elles, via ce processeur de traitement à un port unique (0) duquel ces terminaisons sont reliées par un bus unique (6), via un agencement de mise en phase (12), ce bus étant composé de deux liaisons multiplexes temporelles inverses;
- des terminaisons (3) incluant chacune une interface standardisée (5) pour l'uniformisation des échanges d'informations de signalisation avec la logique de gestion et une interface spécifique (4X, 4Y, 4Z) pour les adaptations nécessaires à la transmission des informations entre les terminaux ou liaisons desservis par la terminaison considérée et la logique de gestion.

2. Système de commutation, selon la revendication 1, caractérisé en ce qu'il comporte une base de temps (9) produisant cycliquement trois interruptions cycliques distinctes, soit respectivement une interruption prioritaire (INT 1) de traitement de signal dont la période correspond à la durée d'une trame temporelle du système, une interruption de gestion (INT2) des entrées/sorties au travers du port (0) de raccordement des terminaisons au processeur, dont la période correspond à la durée d'un intervalle de temps de trame ainsi qu'une interruption de gestion en temps réel (INT3) des tâches téléphoniques, pour rythmer le fonctionnement du processeur.

3. Système de commutation, selon la revendication 1, caractérisé en ce qu'il comporte une logique de gestion programmée (15) dont le système logiciel comprend un logiciel de traitement en temps réel des signaux rapides reçus des terminaisons et un logiciel de gestion à trois niveaux associant un logiciel de fonctionnement du processeur de traitement (7), un logiciel de traitement des signalisations, et un logiciel d'application pour la gestion téléphonique, ce dernier étant lui-même divisé en une couche de prise en compte des spécificités des terminaisons desservies et une couche d'exploitation indépendante de ces terminaisons.

## Claims

1. A time-division switching system, of the exchange installation or automatic switching type, which is controlled by a programmed management logic using a control processor associated with a group of random access memories, and which is synchronized in order to ensure the exchange of information selectively and on demand between terminations (3), to which telecommunication terminals (1) are connected either directly or via links (2) which end at other compatible switching systems, to which said terminals are then attached, characterized in that the system includes:
- a programmed management logic (15) provided with a single data handling processor (7) for controlling all of the operations which are effected at the level of the management logic as well as at the level of the terminations (3), with a memory which is directly addressable by this single processor for storing the data and programs, which memory is split into an internal subsystem (14A) for receiving the programs having low level and relating to signal processing, and into an external subsystem (14B) for receiving the management programs and the high level programs; with a sequencer (10), which is associated to a time base (9), for controlling the bi-directional transmissions between the terminations, both with the data handling processor and with themselves via this data handling processor having a single port (O), to which said terminations are connected by a single bus (6) via a phasing circuit (12), said bus being composed of two inverse time-multiplex links;
- terminations (3) each including a standard interface (5) for uniforming the signalling data exchanges with the management logic, and a specific interface (4X, 4Y, 4Z) ensuring the necessary adaptations for the transmission of the data between the terminals or links being served by the considered termination and the management logic.

2. A switching system according to claim 1, characterized in that it comprises a timebase (9) which produces cyclically three distinct cyclic interruptions, namely a priority signal processing interruption (INT1), whose period corresponds to the duration of a frame of the system, a management interruption (INT2) of the inputs/outputs through the connection port (O) of the terminations to the processor, whose period corresponds to the duration of a time slot of the frame, and a real time management interruption (INT3) of the telephone tasks, in order to clock the functioning of the processor.

3. A switching system according to claim 1, characterized in that it comprises a programmed management logic (15), whose system software includes software for real time processing of the high-speed signals received by terminations, and three-level management software combining operating software of the data handling processor (7) itself, software for processing signalling, and application software handling telephone management, the latter being in turn divided into a layer adapted to take into account the specific features of said terminations served, and an operating layer independent of said terminations.

## Patentansprüche

1. Zeitmultiplexvermittlungssystem vom Typ Vermittlungsamt bzw. Endamt, das von einer programmierten Verwaltungslogik mit Steuerprozessor, der einer direkt adressierbaren Speichergruppe zugeordnet ist, gesteuert wird und das synchronisiert wird, um den Informationsaustausch wahlweise und nach Aufforderung zwischen den Anschlüssen (3) durchzuführen, an die die Fernmeldeendgeräte (1) entweder direkt oder über Leitungen (2) angeschlossen sind, die zu anderen kompatiblen Vermittlungssystemen führen, mit denen diese Endgeräte dann verbunden werden, dadurch gekennzeichnet, daß das System aufweist:
- eine programmierte Verwaltungslogik (15), die mit einem einzigen Verarbeitungsprozessor (7) zur Steuerung sämtlicher Operationen, die sowohl im Bereich der Verwaltungslogik als auch der Anschlüsse (3) durchgeführt werden, mit einem Speicher, der zum Speichern von Daten und Programmen direkt durch diesen einzigen Prozessor adressierbar ist und in eine interne Untereinheit (14A) für die Programme der unteren Stufe und der Signalverarbeitung sowie in eine externe Untereinheit (14B) für die Verwaltungsprogramme und die Programme der oberen Stufe unterteilt ist, und mit einer einer Zeitbasis (9) zugeordnete Folgesteuerung (10) versehen ist zum Steuern der bidirektionalen Übertragungen zwischen den Anschlüssen sowohl mit dem Verarbeitungsprozessor als auch untereinander über diesen Verarbeitungsprozessor, wobei diese Anschlüsse über einen einzigen Bus (6) und über eine Phasenanpassungsschaltung (12) an einen einzigen Port (0) des Prozessors angeschlossen sind und der Bus aus zwei inversen Zeitmultiplexleitungen besteht; und
- Anschlüsse (3), die je eine standardisierte Schnittstelle (5) zur Vergleichmäßigung des Signalisationsinformationsaustausches mit der Verwaltungslogik und eine spezifische Schnittstelle (4X, 4Y, 4Z) für die notwendigen Anpassungen an die Informationsübertragung zwischen den Endgeräten oder den von den betrachteten Anschlüssen bedienten Leitungen und der Verwaltungslogik aufweisen.

2. Vermittlungssystem nach Anspruch 1, dadurch gekennzeichnet, daß es eine Zeitbasis (9) aufweist, die zyklisch drei unterschiedliche zyklische Unterbrechungen erzeugt, d.h. eine prioritäre Signalbearbeitungsunterbrechung (INT1), deren Periode der Dauer eines Zeitrahmens des Systems entspricht, bzw. eine Unterbrechung (INT2) zur Verwaltung der durch den Port (O) führenden Eingänge/Ausgänge der Prozessor-Anschlüsse, deren Periode der Dauer eines Rahmenzeitschlitzes entspricht, bzw. eine Unterbrechung (INT3) zur Echtzeitverwaltung der telefonischen Aufgaben, um die Operation des Prozessors zu takten.

3. Vermittlungssystem nach Anspruch 1, dadurch gekennzeichnet, daß es eine programmierte Verwaltungslogik (15) aufweist, deren Systemsoftware eine Software zur Bearbeitung der von den Anschlüssen empfangenen schnellen Signale in Echtzeit und eine Verwaltungssoftware mit drei Ebenen umfaßt, die eine Betriebssoftware des Behandlungsprozessors (7), eine Signalisationsverarbeitungssoftware und eine Anwendungssoftware für die Telefonverwaltung enthält, wobei letztere ihrerseits in eine Schicht zur Berücksichtigung der Besonderheiten der bedienten Anschlüsse und in eine Betriebsschicht unterteilt ist, die von diesen Anschlüssen unabhängig ist.
